## Europäisches Patentamt

## European Patent Office

## Office européen des brevets

(19)

(11) Veröffentlichungsnummer: **0 135 645**
**B1**

(12) # EUROPÄISCHE PATENTSCHRIFT

(45) Veröffentlichungstag der Patentschrift:
25.10.89

(21) Anmeldenummer: 83890170.0

(22) Anmeldetag: 27.09.83

(51) Int. Cl.⁴: **B 62 D 55/08**, B 62 D 55/06,
B 62 B 15/00, B 62 M 27/00

(54) **Laufwerk für Gleitgeräte sowie Gleitgeräte mit solchen Laufwerken.**

(43) Veröffentlichungstag der Anmeldung:
03.04.85 Patentblatt 85/14

(45) Bekanntmachung des Hinweises auf die Patenterteilung:
25.10.89 Patentblatt 89/43

(84) Benannte Vertragsstaaten:
AT BE CH DE FR GB IT LI LU NL SE

(56) Entgegenhaltungen:
DE-C-324 835
FR-A-756 781
FR-A-885 759
FR-A-937 569
FR-A-1 029 272
FR-A-1 487 431
GB-A-413 729
GB-A-1 274 221
US-A-2 315 901
US-A-2 786 690
US-A-3 107 924
US-A-3 443 844

(73) Patentinhaber: Hütter, Hans- Georg, Dr.,
Hauptstrasse 131, A-2372 Giesshübel (AT)

(72) Erfinder: Hütter, Hans- Georg, Dr., Hauptstrasse
131, A-2372 Giesshübel (AT)

(74) Vertreter: Gibler, Ferdinand, Dipl.Ing.Dr.tech.,
Dorotheergasse 7/14, A-1010 Wien (AT)

## Beschreibung

Die Erfindung betrifft ein Laufwerk für Gleitgeräte mit einem eine Laufbahn bildenden, aus zwei gegengleich profilierten, miteinander verbundenen Teilen bestehenden Hohlträger und einem in dieser Laufbahn ringsum geführten Gliederband mit Randflansch dieser Teile untergreifenden, Rollkörper tragenden Gliedern, die einander seitlich mit Wangen überlappen und von die Rollkörper lagernden Achsen durchsetzt sind, wobei der Hohlträger das Gliederband mit Randflanschen führt und das Gliederband von Formkörpern untergriffen ist und die Rollkörper an der Außenseite der Randflansche laufen.

Ein solches Laufwerk ist aus der US-A-2 315 901 bekannt. Der aus zwei ebenen Platten gebildete Hohlträger dieses vorbekannten Laufwerkes ist mit nach außen ragenden, demnach auseinaderweisenden Randflanschen versehen, die das Gliederband mittels am Gliederband befestigter Rollkörper führt, die sowohl zu beiden Seiten jeder Platte als auch unterhalb bzw. oberhalb der Flansche angeordnet sind. Zum Schutz dieser Führungen gegen Verschmutzung und Beschädigung müssen deshalb bei dem vorbekannten Laufwerk elastische Schutzbänder an beiden Außenseiten des Hohlträgers befestigt sein, die diese Führungen abdecken. Dennoch bleiben die zahlreichen empfindlichen Bestandteile dieser Führungen durch Verschmutzung und mechanische Beschädigung gefährdet.

Weiters wurde durch die DE-C-324 835 eine Gliederkette bekannt, bei der jedes Glied dieser Kette mit zwei übereinander angeordneten Fußplatten versehen ist, durch die das Eindringen von Schmutz in den Bereich der Führungsbahn vermieden werden soll. Dabei ergibt sich im bekannten Falle allerdings der Nachteil, daß relativ kompliziert geformte Formkörper, die gleichzeitig die zweiten Fußplatten bilden und die Randflansche untergreifen bzw. in diese eingreifen, vorgesehen werden müssen, die nicht nur eine entsprechend aufwendige Herstellung erfordern, sondern aufgrund deren gegenseitiger Überlappung auch zu einer wesentlichen Erhöhung des Reibungswiderstandes des Gliederbandes bei dessen Umlauf beitragen. Dies umso mehr, als bei der bekannten Lösung nicht ausgeschlossen werden kann, daß Schmutz in den Überlappungsbereich der Formkörper eindringt. Außerdem sind die Rollkörper der Glieder zwischen den Randflanschen der Hohlkörper geführt, wodurch diese bekannte Konstruktion besonders empfindlich gegen das Eindringen von Schmutz ist.

Diese Formkörper sind lediglich zwischen den die Fußplatten abstützenden Wangen der Glieder eingelegt und werden von diesen mitgeschleppt. Dies verkompliziert aber sowohl die Herstellung der Formkörper als auch deren Einbau und führt überdies zu weiteren Reibungsflächen an den Stirnseiten der Wangen der Glieder, wodurch sich aber auch der Verschleiß des Gliederbandes erhöht.

Aufgabe der Erfindung ist es, ein Laufwerk der eingangs bezeichneten Gattung so zu gestalten, daß alle seine der Führung des Gliederbandes dienenden gefährdeten Bestandteile gut geschützt und abgeschirmt angeordnet werden können und durchwegs eine solide Führung und Halterung am gemeinsamen Träger finden.

Erfindungsgemäß ist daher vorgesehen, daß der Hohlträger in an sich bekannter Weise schalenförmig gestaltete Teile aufweist, die das Gliederband mit einwärts gerichteten, gegeneinander weisenden Randflanschen führen und die die Randflansche untergreifenden Formkörper der Glieder des Gliederbandes von eine in Laufrichtung des Gliederbandes wesentlich geringere Erstreckung als dessen Glieder aufweisenden ebenen Plättchen od. dgl. gebildet sind, die quer zur Laufrichtung des Gliederbandes in hiefür vorgesehene Ausnehmungen der Wangen der Glieder verankert sind.

Durch diese Maßnahmen können alle beweglichen Teile der Führung innerhalb des hohlen Trägers angeordnet werden und sind gegen Beanspruchungen aller Art insbesondere gegen Verschmutzung einwandfrei geschützt. So ist es möglich das Gliederband im Inneren des Hohlträgers sicher zu führen. Außerdem läßt sich durch die Schalenform der beiden Teile des Trägers mit geringem Materialaufwand eine hohe Steifigkeit des Trägers erzielen und dessen Herstellung außerordentlich vereinfachen.

Ferner ermöglicht es diese Ausführungsform des Hohlträgers, an die Randflanschen untergreifenden Gliedern des Gliederbandes Rollkörper, z. B. Rollen, Walzen, Kugeln u. dgl., zu lagern, die auf diese Weise gleichfalls vollkommen geschützt und verkapselt untergebracht sind.

Als Lastträger für die Nutzlast, also für den bedarfsweise anzuordnenden und zu gestaltenden Aufbau des Gleitgerätes, kann ein bügelförmiger, vorzugsweise U-förmig profilierter Lastträger vorgesehen sein, dessen Schenkel an den einander gegenüberliegenden Längsseiten des Hohlträgers befestigbar sind.

Nach einem weiteren Merkmal der Erfindung kann vorgesehen sein, daß die Formkörper in die Ausnehmungen der Glieder einschiebbar und in diesen mit Formschluß einrastbar bzw. ausrastbar gehalten sind, wodurch eine einfache Montage der Formkörper ermöglicht wird. In diesem Zusammenhang ist es besonders günstig, wenn durch einen vom einzelnen Glied des Gliederbandes ausragenden Zapfen, der in eine zwischen zwei kulissenartigen Vorsprüngen des Plättchens gebildete Ausnehmung, z. B. eine V-förmige Kerbe, einrastbar ist.

Das erfindungsgemäße Laufwerk eignet sich, wie schon eingangs erwähnt, für überaus mannigfaltige Anwendungen, so kann es beispielsweise als Rodel, geländegängiges Gleitfahrzeug usw. für verschiedene Aufgaben herangezogen werden, aber auch als Sport- und Spielgerät gestaltet werden, wobei in allen Anwendungsfällen der Vorteil maßgebend in Erscheinung tritt, daß dieses Laufwerk eine in sich geschlossene Einheit verkörpert, deren empfindliche Teile zuverlässig innerhalb des Hohlträgers derart angeordnet sind, daß an der Außenseite lediglich die Laufflächen der Glieder des Gliederbandes zutagetreten.

Der besseren Verständlichheit halber sind weitere Erfindungsmerkmale, insbesondere weitere konstruktive Einzelheiten des Gliederbandes sowie verschiedene Anwendungsmöglichkeiten des Laufwerkes im Verband von Gleitgeräten, nachstehend an Hand von Ausführungsbeispielen erläutert, die in den Zeichnung veranschaulicht sind.

Im einzelnen zeigt von diesen Zeichnungen:

Figur 1 eine Längsansicht eines einzelnen Laufwerkes,

Figur 2 ist teils eine Draufsicht, teils ein Waagschnitt nach II-II der Figur 1 und

Figur 3 ein Querschnitt nach III-III der Figur 1,

Figur 4 bis 6 zeigen ein einzelnes Glied des Gliederbandes in einer Draufsicht, einem Längsschnitt und einer Stirnansicht,

Figur 7 stellt eine Einzelheit eines solchen Gliedes in einem Schnitt nach VII-VII der Figur 6 dar,

Figur 8 und 9 zeigen schaubildlich sowie in einem schematischen Längsschnitt eine erste Ausführungsform eines Gleitgerätes,

Figur 10 eine zweite Ausführungsform und

Figur 11 eine dritte Ausführungsform,

Figur 12 und 13 zeigen je eine Längsansicht weiterer Ausführungsformen,

Figur 14 und 15 stellen in schematischen Längsansichten dar, wie ein erfindungsgemäßes Laufwerk gewünschtenfalls mit einem Getriebe durch Muskel- oder Motorkraft angetrieben werden kann.

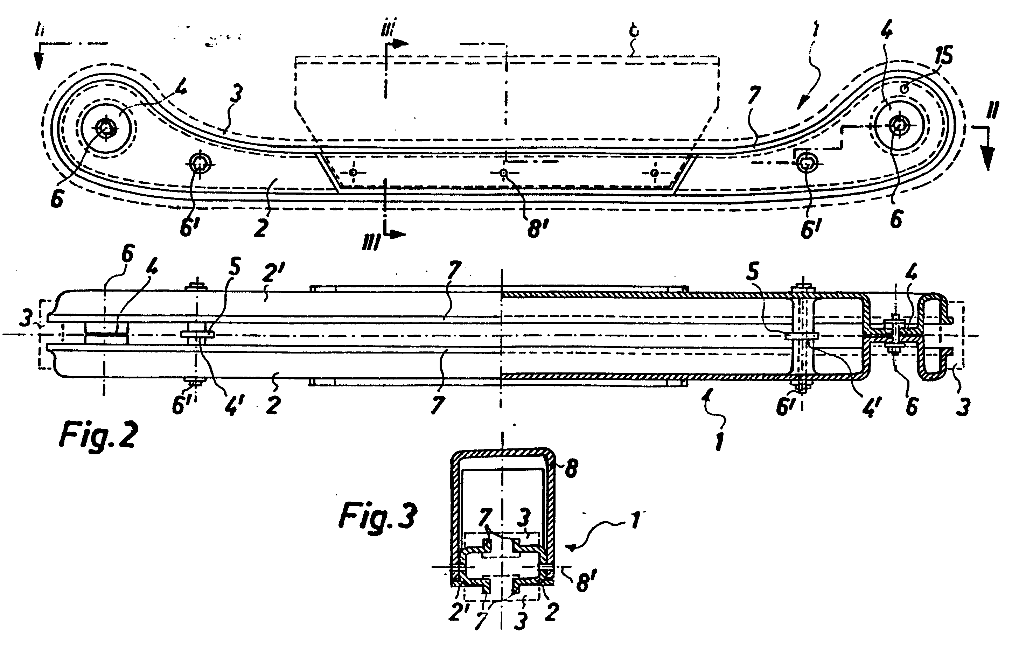

Gemäß der Figuren 1 und 2 besteht das Laufwerk 1 aus dem eine Laufbahn bildenden Hohlträger, der seinerseits aus einem Paar schalenförmiger, gegengleich profilierter Teile 2 und 2' zusammengesetzt ist und das ringsum laufende Gliederband 3 führt, das in diesen Figuren nur gestrichelt angedeutet ist.

Die beiden Teile 2, 2' des Hohlträgers sind über ihre Böden 4 bzw. 4' unmittelbar oder über Distanzstücke 5 mittelbar durch Schraubbolzen 6 bzw. 6' miteinander verbunden. Die einwärts gegeneinander gerichteten Randflanschen 7 führen gemeinsam das Gliederband 3, das sich mit seinen Führungsorganen in das Innere des Hohlträgers erstreckt.

An den beiden Flanken, nämlich an den Längsseiten des Hohlträgers 2, 2' ist ein bügelförmiger, U-förmig profilierter, die Laufbahn des Gliederbandes 3 überbrückender Lastträger 8 befestigbar, dessen Schenkel an den Längsseiten der Teile 2, 2' des Hohlträgers mittels Schraubbolzen 8' befestigbar sind.

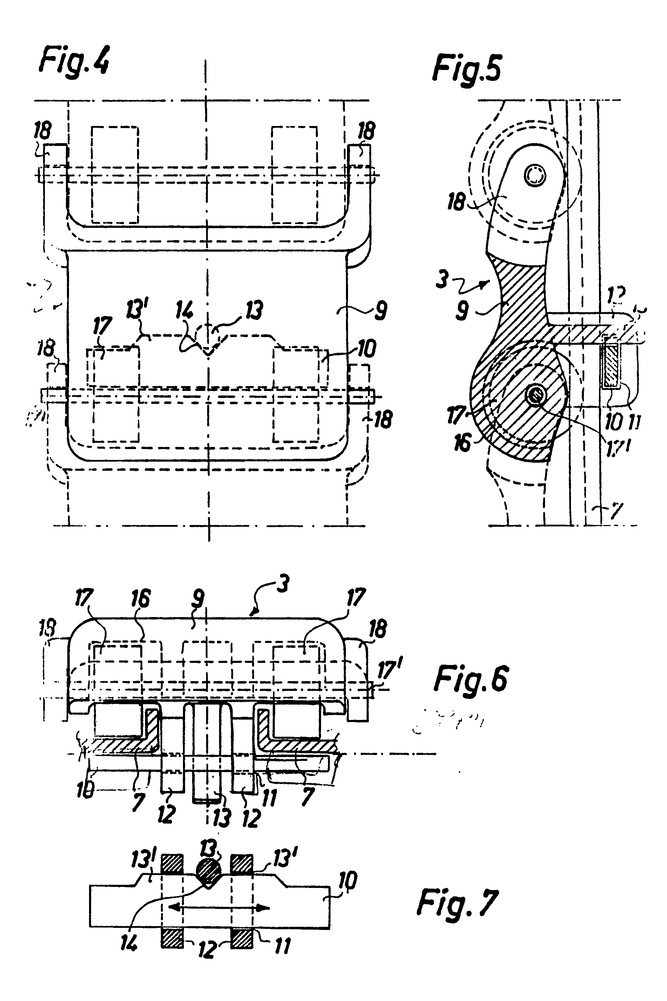

Wie die Figuren 3 bis 7 zeigen, untergreifen die einzelnen Glieder 9 des zwischen den Randflanschen 7 geführten Gliederbandes 3 diese Randflanschen 7 mit Plättchen 10 von länglichem, etwa rechteckförmigem Querschnitt; diese Plättchen sind quer zur Laufrichtung des Gliederbandes 3 in hiefür vorgesehene Ausnehmungen 11 einwärtsragender Wangen 12 der einzelnen Glieder 9 einschiebbar und werden durch Formschluß, nämlich durch Einrasten eines gleichfalls einwärts ragenden Zapfens 13 in einer längsmittigen, zwischen zwei kulissenartigen Vorsprüngen 13' des Plättchens 10 gebildeten Kerbe 14 in solcherart verriegelter Stellung in den Ausnehmungen 11 festgehalten. Aus dieser Rast kann jedes einzelne Plättchen 10 bedarfsweise durch Querverschieben entfernt werden; hiefür ist in den Teilen 2 und 2' je eine Ausnehmung 15 (Figur 1) vorgesehen, über die die Stirnseiten des Plättchens 10 zugänglich sind.

In den Ausnehmungen 16 des einzelnen Gliedes 9 lagern auf der gemeinsamen Achse 17' Rollkörper 17, im vorliegenden Fall Rollen, die aber gleichwertig auch durch Walzen, Kugeln od.dgl. ersetzt werden könnten. Die gemeinsamen Achsen 17' durchsetzen jeweils nicht nur das die Rollkörper 17 aufnehmende Glied 9, sondern auch die Wangen 18 des jeweils nächsten Gliedes 9, sie dienen also vorteilhafterweise nicht nur der Lagerung der Rollkörper 17, sondern auch der Verbindung der Glieder 9 untereinander zu einem Band.

Dank dieser Ausbildung und Führung des Gliederbandes 3 ist es nicht nur innig an den beiden Teilen 2 und 2' des Hohlträgers verriegelt und solide geführt, sondern es bietet vorteilhafterweise lediglich die flächige Außenseite der einzelnen Glieder 9 den in der Praxis auftretenden Beanspruchungen dar und ist dadurch auch bei einer Benutzung auf rauhem, verschmutztem bzw. bewachsenem Gelände weitgehend gegen Beschädigungen unempfindlich.

Ein weiterer beachtlicher Vorteil ergibt sich ferner daraus, daß alle wesentlichen Bestandteile des Laufwerkes dank ihrer Gestaltung aus einem Kunststoff gefertigt werden können, also durchwegs aus einheitlichem Material. Dadurch werden alle Schwierigkeiten und Störungsquellen, die sich aus unterschiedlicher Dehnung solcher Bestandteile ergeben könnten, von vornherein vermieden und dem Auftreten temperaturbedingter Formänderungen wird zuverlässig vorgebeugt.

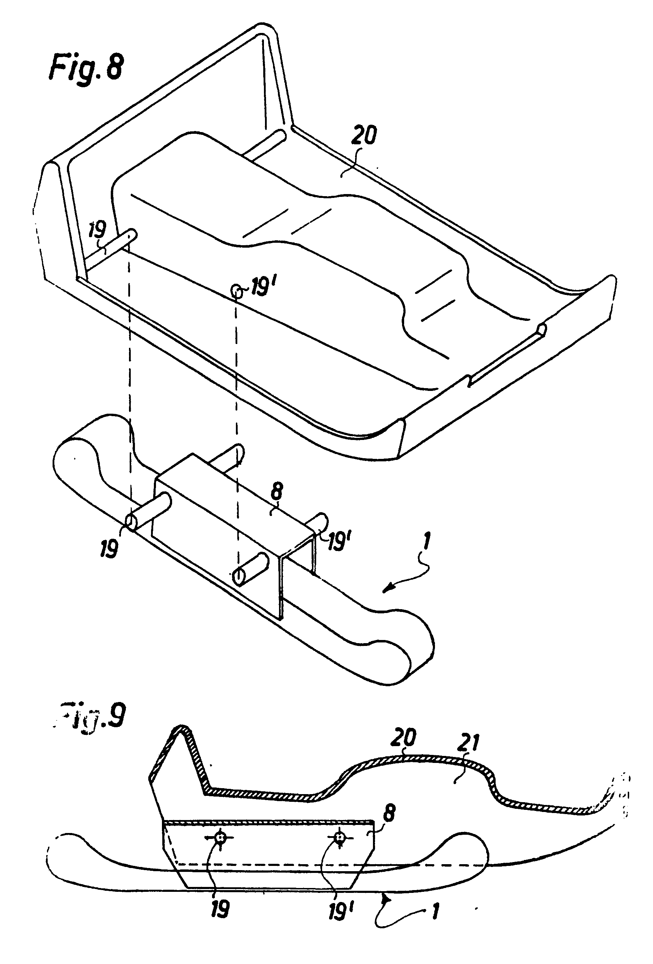

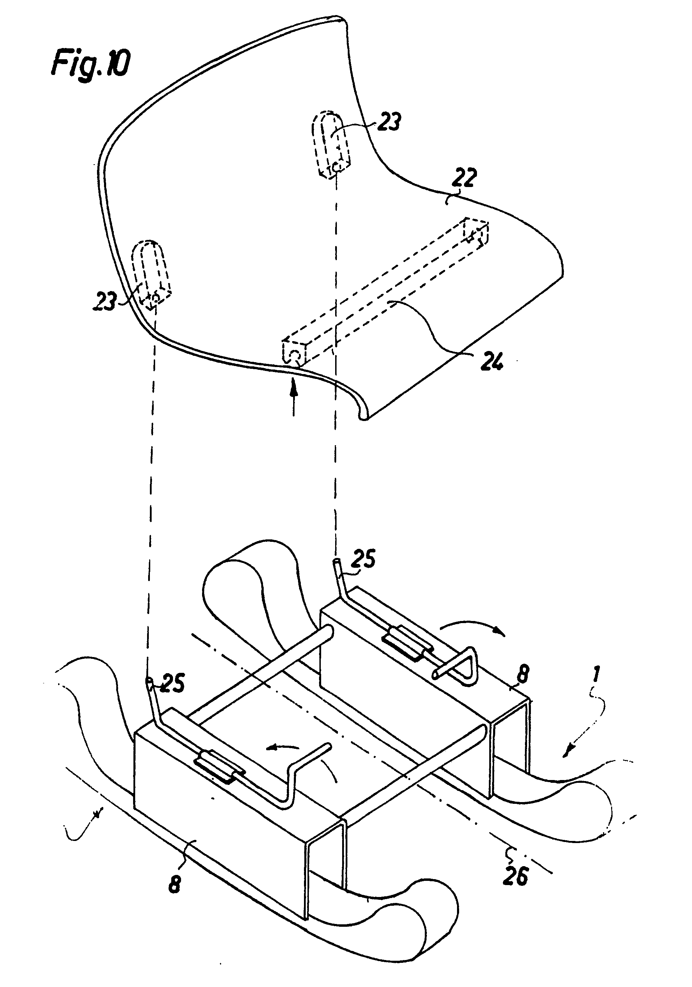

Gemäß der in den Figuren 8 und 9 dargestellten Anwendungsmöglichkeit ist ein einzelnes Laufwerk 1 mittels der Querstangen 19 und 19' an der Unterseite einer lasttragenden, z. B. als Bob benutzbaren Gleitplatte 20 längs deren Mitte verlaufend in einem nach unten hin offenen Hohlraum 21 dieser Gleitplatte 20 untergebracht. Das Laufwerk 1 verringert in dieser Anordnung nicht nur erheblich den Gleitwiderstand der Gleitplatte 20 bei Verwendung auf rauhem Gelände, sondern gibt der Gleitplatte 20 auch eine gute Führung in deren Längsrichtung. Das Laufwerk 1 ist lösbar zu befestigen, um eine Umwandlung des Gerätes vom Winter- auf Sommerbetrieb, d.h. eine wahlweise Benutzung

auf beschneitem, vereistem oder begrasten Gelände zu ermöglichen.

Bei der in Figur 10 veranschaulichten Ausführungsform eines Gleitgerätes trägt ein Paar zueinander paralleler Laufwerke 1 vermittels derer U-förmig profilierter Lastträger 8 einen Sitz 22, der an seiner Unterseite und Rückseite Halteorgane 23 bzw. 24 für an den Lastträgern 8 verstellbar gelagerte Haltestangen 25 aufweist, deren Enden in die Halteorgane 23 bzw. 24 einführbar bzw. einrastbar sind, um auf diese Weise den Sitz 22 lösbar an den Laufwerken 1 zu befestigen. In der Längsachse 26 dieses Gerätes kann gewünschtenfalls eine Deichsel angeordnet werden, die als Fußstütze für den Benutzer, gegebenenfalls auch zum Anhängen des Gerätes an einen Skilift benutzbar ist.

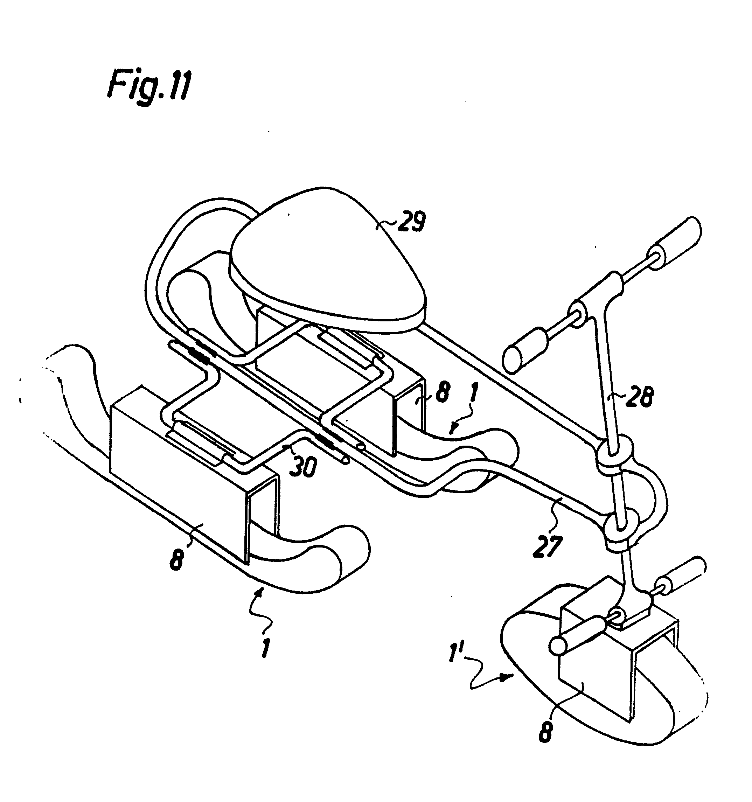

Gemäß der Ausführungsform eines Gleitgerätes nach Figur 11 ist ein fahrrad- bzw. skibobähnlicher Tragrahmen 27 auf drei erfindungsgemäßen Laufwerken 1, 1' gelagert, wobei das die Lenksäule 28 tragende Laufwerk 1' - zum Unterschied gegenüber den beiden hinteren Laufwerken 1 - an seiner Ober- und Unterseite konvex gewölbt ausgebildet ist, um im Bodenkontakt mit möglichst geringer Reibung verschwenkt werden zu können.

Der den Sitz 29 tragende Tragrahmen 27 ist über Bügel 30 beidseitig mit den beiden Lastträgern 8 der Laufwerke 1 gelenkig schwenkbar verbunden, um einerseits diesen Laufwerken 1 eine individuelle Einstellung zum Boden zu ermöglichen, anderseits den Tragrahmen 27 gegenüber den Laufwerken 1 zu federn und ihn bedarfsweise, z. B. beim Befahren von Kurven bzw. Hängen in Bezug zum Boden schräg stellen zu können. Beispielsweise kann die Verbindung zwischen dem Tragrahmen 27 und den Lastträgern 8 mittels - nicht dargestellter - Zug-, Druck- oder Torsionsfedern bewerkstelligt werden, die den Tragrahmen 27 in aufrechter Normalstellung zu halten trachten, jedoch dessen Seitwärtsverschwenkung zulassen.

Ein Fahrzeug nach Figur 11 kann im Rahmen der Erfindung selbstverständlich auch abgewandelt mit einer vorderseitigen Gleitkufe oder einem hinterseitigen Gleitkufenpaar ausgestattet werden.

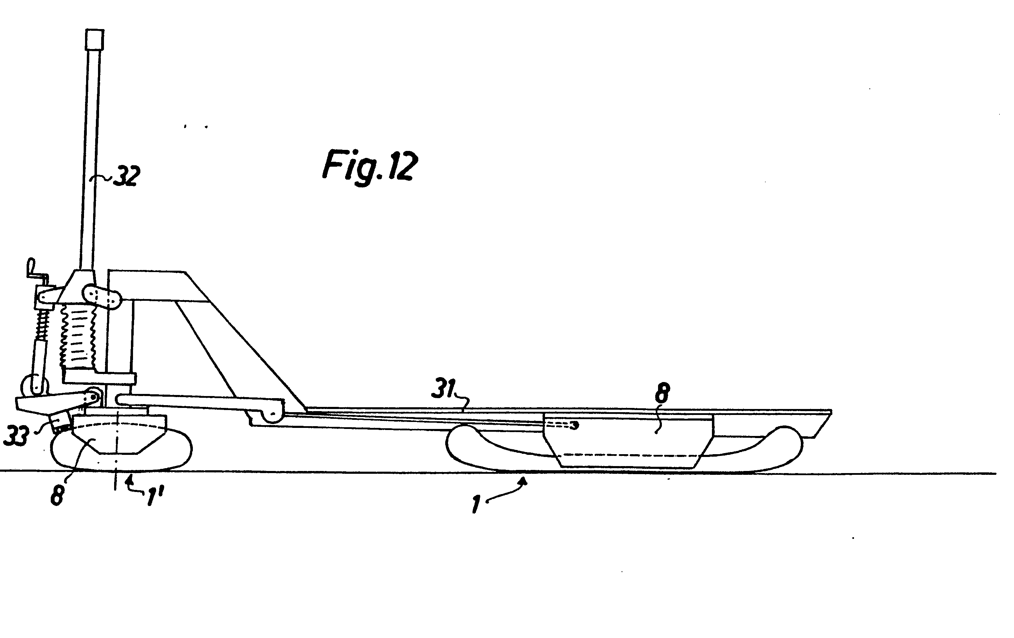

Figur 12 zeigt einen Lastentransporter mit einer Tragplatte 31, die hinterseitig auf einem Paar von Laufwerken 1 aufruht und vorderseitig auf einem lenkbaren Laufwerk 1' aufgesattelt ist. Die Deichsel 32 kann zum Lenken des Fahrzeuges (durch Verschwenken des Laufwerkes 1'), aber auch zum hydraulischen Heben der Tragplatte 31, wie auch zum Bremsen durch Aufsetzen eines Bremsbelages 33 auf die Oberseite des Laufwerkes 1' benutzt werden. Ein solcher Bremsbelag 33 kann aus einer Weichgummiplatte bestehen, gegebenenfalls auch aus einem längs des Laufwerkes 1 angeordneten Schlauch od.dgl.

Solche Gleitgeräte, die im wesentlichen aus einer Tragplatte 31 und unterseitig befestigten Laufwerken 1, 1' bestehen, können im Rahmen der Erfindung in sehr mannigfachen Varianten ausgebildet werden, z. B. als einfache genormte Tragplatten, an deren gegliederter Unterseite sich erfindungsgemäße Laufwerke unschwer lösbar befestigen lassen, aber auch als geländegängige Wind-Surfer od.dgl. Sportgeräte, deren Lenkbarkeit durch eine konvexe Form der Unterseite des Laufwerkes begünstigt wird.

Bei solchen Gleitgeräten besteht auch die Möglichkeit, das Laufwerk in einem schwenkbar an der Unterseite der Tragplatte gelagerten Träger unterzubringen, dessen dem Laufwerk gegenüberliegende Längsseite als Kufe ausgebildet ist, um solcherart die Tragplatte wahlweise als reines Gleitgerät auf Kufen oder auf erfindungsgemäßen Laufwerken gleiten zu lassen.

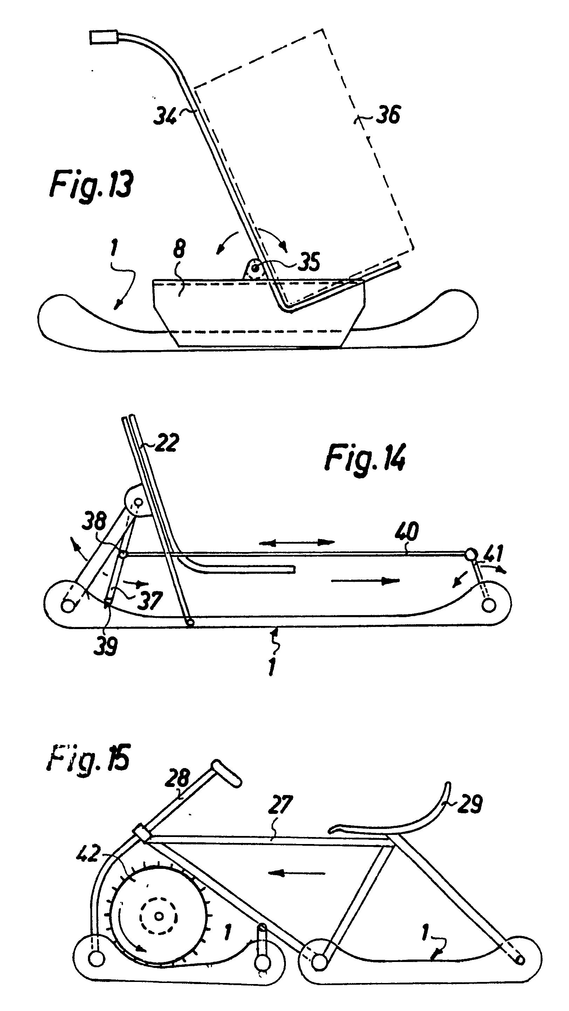

Die Geländegängigkeit erfindungsgemäßer Laufwerke 1 und 1' läßt sich auch dann gut verwerten, wenn solche Laufwerke beispielsweise für sogenannte Sack-Rodeln od.dgl. Transportbehelfe gemäß Figur 13 verwendet werden. Mit einer schwenkbar gelagerten Gabel 34, die in an der Oberseite der Lastträger 8 angeordneten Gelenken 35 gelagert ist, kann eine Last 36 ohne nennenswerten Kraft- und Geschicklichkeitsaufwand auch über erhebliche Unebenheiten, Stufen oder Stiegen transportiert werden.

Schließlich zeigen die Figuren 14 und 15 anschaulich, jedoch nur schematisch, Möglichkeiten eines Antriebes erfindungsgemäßer Laufwerke 1. Diese Möglichkeiten ergeben sich ursächlich daraus, daß die Gliederbänder solcher Laufwerke 1 besonders solide mit ihrem hohlen Träger gekuppelt und verriegelt sind und solcherart ein Getriebe in wirksamen, form- und kraftschlüssigen Kontakt mit dem außenliegenden, zutagetretenden Bereich des Gliederbandes 3 zu treten vermag, wogegen die bisher üblichen Gleisketten einer Reihe von Antriebsrollen bedurften, die im Inneren der Gleiskette angeordnet werden mußten.

Gemäß Figur 14 ist ein solches Getriebe beispielsweise als Hebelgetriebe ausgebildet, indem es einen auf einen Bereich des oberen Trums des Gliederbandes einwirkenden, in eine hin- und hergehende Bewegung versetzbaren Hebel 37 umfaßt, der oberhalb des Gliederbandes 3 in einer zum Gliederband parallelen Ebene im Gelenk 38 schwenkbar gelagert ist und nach Art eines Gesperres bzw. Schubtriebes mit einer Klinke 39 zwischen die Glieder des Gliederbandes eingreifend mit diesen Gliedern zu einem schrittweisen Vorschub des Laufwerkes 1 zusammenwirkt. Das Gestänge 40 ist mit einem Pedalhebe 41 gelenkig verbunden, der durch Fußantrieb in eine hin- und hergehende Bewegung versetzbar ist.

Gemäß Figur 15 hingegen steht das obere, in einem Bereich kreisbogenförmig geführte Trum des Gliederbandes mit der Peripherie eines kreisförmigen Trieblings, z. B. einer Zahnscheibe 42, in kraftschlüssiger Antriebsverbindung.

Darüber hinaus stehen noch vielerlei andere Möglichkeiten für einen Muskelkraftantrieb oder motorischen Antrieb der Gliederbänder erfindungsgemäßer Laufwerke offen, so etwa die Verwendung eines mit den Gliederbändern zusammenwirkenden Schraub- oder Schneckentrieblings. Bei Anordnung mehrerer Laufwerke und motorischer Antriebe besteht auch - wie an sich bei Gleiskettenfahrzeugen bekannt - die Möglichkeit einer Lenkung durch differenzierten Antrieb der einzelnen Gleisketten.

**Patentansprüche**

1. Laufwerk für Gleitgeräte mit einem eine Laufbahn bildenden, aus zwei gegengleich profilierten, miteinander verbundenen Teilen (2, 2') bestehenden Hohlträger und einem in dieser Laufbahn ringsum geführten Gliederband (3) mit Randflansche (7) dieser Teile (2, 2') untergreifenden, Rollkörper (17) tragenden Gliedern (9), die einander seitlich mit Wangen (18) überlappen und von die Rollkörper (17) lagernden Achsen (17') durchsetzt sind, wobei der Hohlträger das Gliederband (3) mit Randflanschen (7) führt und das Gliederband von Formkörpern untergriffen ist und die Rollkörper 17) an der Außenseite der Randflansche (7) laufen, dadurch gekennzeichnet, daß der Hohlträger in an sich bekannter Weise schalenförmig gestaltete Teile (2, 2') aufweist, die das Gliederband (3) mit einwärts gerichteten, gegeneinader weisenden Randflanchen (7) führen und die die Randflanche (7) untergreifenden Formkörper der Glieder (9) des Gliederbandes (3) von eine in Laufrichtung des Gliederbandes wesentlich geringere Erstreckung als dessen Glieder (9) aufweisenden eben Plättchen (10) od. dgl. gebildet sind, die quer zur Laufrichtung des Gliederbandes (3) in hierfür vorgesehene Ausnehmungen (11) der Wangen (12) der Glieder (9) verankert sind.

2. Laufwerk nach Anspruch 1, dadurch gekennzeichnet, daß die Formkörper (10) in die Ausnehmungen (11) der Glieder (9) einschiebbar und in diesen mit Formschluß einrastbar bzw. ausrastbar gehalten sind.

3. Laufwerk nach Anspruch 1 oder 2, gekennzeichnet durch einen vom einzeln Glied (9) des Gliederbandes (3) ausragenden Zapfen (13), der in eine zwichen zwei kulissenartigen Vorsprüngen (13') des Plättchens (10) gebildete Ausnehmung, z. B. eine V-förmige Kerbe (14), einrastbar ist (Fig. 4 bis 7).

4. Laufwerk nach einem der Ansprüche 1 bis 3, dadurch gekennzeichnet, daß die Randflansche (7) der Hohlkörper in deren freie Endbereiche eine in Richtung der Achsen der Rollkörper (17) weisende Abwinkelung aufweisen.

5. Laufwerk nach einem der Ansprüche 1 bis 4, gekennzeichnet durch einen bügelförmigen, vorzugsweise U-förmig profilierten Lastträger (8), der die Laufbahn des Gliederbandes (3) überbrückend mit seinen Schenkeln an den einander gegenüberliegenden Längsseiten des Hohlträgers (2, 2') befestigt ist (Figur 3).

6. Gleitgerät mit einem Laufwerk nach einem der Ansprüche 1 bis 5, dadurch gekennzeichnet daß dieses einzelne Laufwerk (1) an der Unterseite einer lasttragenden Gleitplatte (20) längs deren Mitte verlaufend, vorzugsweise teilweise in einem nach unten offenen Hohlraum (21) dieser Gleitplatte (20) versenkt, angeordnet ist (Figuren 8 und 9).

7. Gleitgerät mit Laufwerken nach einem der Ansprüche 1 bis 5, dadurch gekennzeichnet, daß zumindest ein Paar zueinander paralleler, von einander distanzierter Laufwerke (1) einen, gegebenenfalls als Sitz (22), als Transportplatte (31) od. dgl. ausgebildeten lasttragenden Aufbau trägt (Figuren 10 und 12).

8. Gleitgerät mit zumdienst einem Laufwerk nach einem der Ansprüche 1 bis 5, dadurch gekennzeichnet, daß auf diesem Laufwerk (1, 1') ein aufrechtstehender, z. B. als Träger eines Sitzes (29) ausgebildeter Tragrahmen (27) angeordnet ist (Figuren 11 und 13).

9. Gleitgerät nach einem der Patentansprüche 6 bis 8, dadurch gekennzeichnet, daß ein Antrieb des Laufwerkes (1) ein auf einen Bereich der Oberseite des oberen Trums des Gliederbandes (3) kraftschlüssig einwirkendes Getriebe (37 - 41 bzw. 42) umfaßt (Figuren 14 und 15).

10. Gleitgerät nach Patentanspruch 9, dadurch gekennzeichnet, daß das Gliederband (3) im oberen Trum bereichsweise konkav, vorzugsweise kreisbogenförmig, geführt und in diesem Bereich an seiner Oberseite mit einem Teil des Getriebes kraftschlüssig verbunden ist (Figuren 14 und 15).

11. Gleitgerät nach Patentanspruch 10, dadurch gekennzeichnet, daß das Getriebe (37 - 42) als Hebelgetriebe ausgebildet ist und einen auf den konkaven Bereich des oberen Trums des Gliederbandes (3) einwirkenden, in eine hin- und hergehende Bewegung versetzbaren, mit einer Klinke versehenen Hebel (37) umfaßt, wobei diese Klinke (39) zwischen die Glieder (9) des Gliederbandes (3) eingreifend dessen schrittweisen Vorschub bewirkt (Figur 14).

12. Gleitgerät nach Patentanspruch 10 dadurch gekennzeichnet, daß das obere Trum des Gliederbandes (3) im kreisbogenförmig geführten Bereich mit der Peripherie eines kreisbogendförmig Trieblings, z. B. einer Zahnscheibe (42), eines Reibrades od. dgl., in kraftschlüssiger Verbindung steht (Figur 15).

13. Gleitgerät nach einem der Patentansprüche 6 bis 12, gekennzeichnet durch ein Bereich der Oberseite des oberen Trums kraftschlüssig einwirkendes Bremsorgan, z. B. eine Bremsbacke (33), einen Schlauch od. dgl. (Figur 12).

**Claims**

1. Running gear for slide means having a hollow support member forming a track and comprising two mirror-image interconnected parts (2, 2'), and having a link conveyor (3) guided around in this track with links (9) gripping below peripheral flanges (7) of these parts (2, 2') and carrying roller bodies (17), these links (9) overlapping one another laterally by means of cheeks (18) and being traversed by spindles (17') on which the roller bodies (17) are mounted, the hollow support member guiding the link conveyor (3) with peripheral flanges (7) and the link conveyor being gripped underneath by shaped bodies and the roller bodies (17) running along the outside of the peripheral flanges (7), characterized in that the hollow support member has parts (2, 2') formed in the shape of shells in a manner known per se and guiding the link conveyor (3) with inwardly directed, mutually opposed peripheral flanges (7), and the shaped bodies, gripping underneath the peripheral flanges (7), of the links (9) of the link conveyor (3) are formed from flat platelets (10) or the like extending substantially less far in the direction of running of the link conveyor than the links (9) thereof, these platelets (10) being anchored transversely to the direction of running of the link conveyor (3) in recesses (11) provided therefor of the cheeks (12) of the links (9).

2. Running gear according to Claim 1, characterized in that the shaped bodies (10) are held in a manner pushable into the recesses (11) of the links (9) and positively latchable or unlatchable in the latter.

3. Running gear according to Claim 1 or 2, characterized by a pin (13) which projects from the individual link (9) of the link conveyor (3) and is latchable into a recess, e.g. a V-shaped notch (14), formed between two rounded projections (13') of the platelet (10) (Fig. 4 to 7).

4. Running gear according to one of Claims 1 to 3, characterized in that the peripheral flanges (7) of the hollow support members have in their free end regions a bevel directed towards the spindles of the roller bodies (17).

5. Running gear according to one of Claims 1 to 4, characterized by a bracket-shaped, preferably U-shaped profiled load carrier (8) which, bridging the track of the link carrier (3), is secured to the mutually opposing longitudinal sides of the hollow support member (2, 2') by means of its legs (Figure 3).

6. Slide means having a running gear according to one of Claims 1 to 5, characterized in that this individual running gear (1) is arranged on the underside of a load-carrying slide plate (20), running along the centre thereof, preferably partially sunk in a hollow space (21), open underneath, of this slide plate (20) (Figures 8 and 9).

7. Slide means having running gears according to one of Claims 1 to 5, characterized in that at least one pair of mutually parallel, spaced running gears (1) carries a load-carrying structure, if desired constructed as a seat (22), as a transport plate (31) or the like (Figures 10 and 12).

8. Slide means having at least one running gear according to one of claims 1 to 5, characterized in that there is arranged on this running gear (1, 1') an upright support frame (27), constructed for example as the support member of a seat (29) (Figures 11 and 13).

9. Slide means according to one of Claims 6 to 8, characterized in that a drive of the running gear (1) comprises a gear (37 - 41 or 42) acting positively on a region of the upper side of the upper run of the link conveyor (3) (Figures 14 and 15).

10. Slide means according to Claim 9, characterized in that a region of the link conveyor (3) is guided in the upper run concavely, preferably in an arc, and is positively connected in this region along its upper side to part of the gear (Figures 14 and 15).

11. Slide means according to Claim 10, characterized in that the gear (37 - 42) is constructed as a lever gear and comprises a lever (37) which acts on the concave region of the upper run of the link conveyor (3), is displaceable in a to-and-fro movement and is provided with a latch, this latch (39) engaging between the links (9) of the link conveyor (3) to bring about the stepwise feeding thereof (Figure 14).

12. Slide means according to Claim 10, characterized in that the upper run of the link conveyor (3) is positively connected in the region guided in an arc to the periphery of a circular pinion, e.g. of a toothed disc (42), a friction wheel or the like (Figure 15).

13. Slide means according to one of Claims 6 to 12, characterized by a braking element acting positively on a region of the upper side of the upper run, e.g. a brake gripper (33), a tube or the like (Figure 12).

**Revendications**

1. Train de roulement pour engins glissants, comportant un support creux, formant un chemin de roulement et constitué de deux parties (2, 2') à profils symétriques et reliées entre elles, et une bande à maillons (3), guidée dans ce chemin de roulement en en faisant tout le tour et comportant des maillons (9) qui s'accrochent sous des rebords (7) de ces parties (2, 2') et portent des corps de roulement (17) et qui se chevauchent latéralement entre eux par des joues (18) et sont traversés par des axes (17') portant les corps de roulement (17), tandis que le support creux guide la bande à maillons (3) par ses rebords (7), que la bande à maillons est accrochée par-dessous par des pièces de forme et que les corps de roulement (17) se déplacent sur la face extérieure des rebords (7), caractérisé en ce que le support creux comprend des parties (2, 2'), réalisées d'une façon connue en soi en forme de coquille, qui guident la bande à maillons (3) à l'aide des rebords (7) qui sont dirigés vers l'intérieur et sont tournés l'un vers l'autre et en ce que les pièces de forme des maillons (9) de la bande à maillons (3) qui s'accrochent en-dessous de ces rebords (7) sont constituées par des plaquettes planes (10), ou éléments analogues, qui s'étendent, suivant la direction de déplacement de la bande à maillons, sur une longueur nettement plus faible que celle des maillons (9) et qui, transversalement à la direction de déplacement de la bande à maillons (3), s'accrochent dans des évidements (11), prévus à cet effet, des joues (12) des maillons (9).

2. Train de roulement suivant la revendication 1, caractérisé en ce que les pièces de forme (10) peuvent s'introduire dans les évidements (11) des maillons (9) et sont maintenues dans ceux-ci en pouvant s'y enclencher par complémentarité de forme et en pouvant se libérer de cet enclenchement.

3. Train de roulement suivant la revendication 1 ou 2, caractérisé par un doigt (13) qui fait saillie sur le maillon individuel (9) de la bande à maillons (3) et qui peut s'enclencher dans un évidement, par exemple une encoche en V (14), formé entre deux saillies en forme de panneaux (13') de la plaquette (10) (fig. 4 à 7).

4. Train de roulement suivant l'une des revendications 1 à 3, caractérisé en ce que les rebords (7) du corps creux comportent, dans leurs zones extrêmes libres, une partie coudée tournée en direction des axes des corps de roulement (17).

5. Train de roulement suivant l'une des revendications 1 à 4, caractérisé par un porte-charge (8) en forme d'étrier, de préférence profilé en U, qui, en chevauchant le chemin de roulement de la bande à maillons (3), est fixé par ses branches sur les faces longitudinales du support creux (2, 2') qui se font face l'une l'autre (figure 3).

6. Engin glissant comportant un train de roulement suivant l'une des revendications 1 à 5, caractérisé en ce que ce train de roulement unique (1) est monté sur la face inférieure d'une plaque glissante (20) porteuse de charge, en s'étendant le long de la ligne médiane de celle-ci, de préférence en étant partiellement encastré dans une cavité (21), s'ouvrant vers le bas, de cette plaque glissante (20).

7. Engin glissant comportant des trains de roulement suivant l'une des revendications 1 à 5, caractérisé en ce qu'au moins une paire de trains de roulement (1), parallèles entre eux et situés à distance l'un de l'autre, porte une structure de support de charge, éventuellement réalisée sous forme d'un siège (22), d'une plaque de transport (31) ou d'un élément analogue (figures 10 et 12).

8. Engin glissant comportant au moins un train de roulement suivant l'une des revendications 1 à 5, caractérisé en ce qu'il est prévu, monté sur ce train de roulement (1, 1'), un châssis porteur (27) dressé verticalement et se présentant par exemple en tant que support d'un siège (29) (figures 11 et 13).

9. Engin glissant suivant l'une des revendications 6 à 8, caractérisé en qu'un entraînement du train de roulement (1) comporte un mécanisme (37 - 41 ou 42) agissant, sous l'influence d'un effort, sur une partie de la face supérieure du train supérieur de la bande à maillons (3) (figures 14 et 15).

10. Engin glissant suivant le revendication 9, ceractérisé en ce que, dans son brin supérieur et par zones, la bande à maillons (3) est guidée d'une manière concave, de préférence suivant une forme en arc-de-cercle, et en ce que, dans cette zone, cette bande à maillons (3) est reliée sur sa face supérieure, sous l'influence d'un effort, à une partie du mécanisme (figures 14 et 15).

11. Engin glissant suivant la revendication 10, caractérisé en ce que le mécanisme (37 - 42) est réalisé sous la forme d'un mécanisme à levier et comporte un levier (37) qui agit sur la zone concave du brin supérieur de la bande à maillons (3), peut être déplacé suivant un mouvement de va-et-vient et est pourvu d'un cliquet, ce cliquet (39) provoquant une avance pas-à-pas des maillons (9) de la bande à maillons (3) en venant en prise entre ces maillons (9) (figure 14).

12. Engin glissant suivant la revendication 10, caractérisé en ce que, dans sa zone guidée suivant une forme en arc-de-cercle, le brin supérieur de la bande à maillons (3) coopère, sous l'influence d'un effort, avec la périphérie d'un organe moteur de forme circulaire, par exemple un disque à dents (42), une roue à friction ou un organe analogue (figure 15).

13. Engin glissant suivant l'une des revendications 6 à 12, caractérisé par un organe de freinage, par exemple une mâchoire de freinage (33), un tuyau souple ou un élément analogue, qui agit, sous l'influence d'un effort, sur une zone de la face supérieure du brin supérieur (figure 12).

Fig.2

Fig.3

EP 0 135 645 B1

*Fig.4*

*Fig.5*

*Fig.6*

*Fig.7*

*Fig.8*

*Fig.9*

Fig.10

# Fig.11

Fig.12

Fig.13

Fig.14

Fig.15